# FASCICULE DE BREVET EUROPEEN

(11) **EP 0 533 529 B1**
(45) Date de publication et mention de la délivrance du brevet: **15.11.1995**
(21) Numéro de dépôt: 92402448.2
(22) Date de dépôt: 07.09.1992
(51) Int. Cl.: G21C 9/016

(54) **Dispositif de protection et de refroidissement de la structure en béton d'un réacteur nucléaire dont le coeur est entré en fusion à la suite d'un accident**
Betonstrukturschutz- und Kühlvorrichtung eines Kernreaktores, dessen Spaltzone nach einem Unfall eine Schmelzung erfährt
Concrete structure shielding and cooling device for a nuclear reactor, whose core undergoes a melt-down following an accident

(30) Priorité: 20.09.1991 FR 9111654
(43) Date de publication de la demande: 24.03.1993
(73) Titulaire: FRAMATOME, 92400 Courbevoie (FR)
(72) Inventeur: Py, Jean-Pierre, F-78220 Viroflay (FR); Malaval, Claude, F-92160 Antony (FR)
(74) Mandataire: Bouget, Lucien

(56) Documents cités:
- WO-A-88/09998
- DE-A- 2 625 357
- FR-A- 2 383 505
- GB-A- 2 236 210
- US-A- 4 342 621

## Description

L'invention concerne un dispositif de protection et de refroidissement de la structure en béton d'un réacteur nucléaire dont le coeur est entré en fusion à la suite d'un accident.

Les réacteurs nucléaires à eau sous pression comportent une cuve de forme générale cylindrique renfermant le coeur du réacteur, disposée avec son axe vertical dans un puits de cuve cylindrique ayant un fond inférieur situé à l'aplomb de la cuve. Le coeur du réacteur nucléaire est refroidi par de l'eau sous pression circulant dans le circuit primaire du réacteur et à l'intérieur de la cuve en contact avec les assemblages combustibles.

Dans le cas de certains accidents survenant dans le réacteur nucléaire et se traduisant par une perte de la fonction de refroidissement du coeur, on doit envisager, compte tenu des conséquences très graves qui en résulteraient, bien que la probabilité d'un tel évènement soit extrêmement faible et pratiquement nulle, le cas où les circuits d'injection de secours du réacteur ne pourraient être mis en fonctionnement. Il peut alors se produire une séquence accidentelle conduisant à la fusion du coeur en l'absence d'eau de refroidissement, ce qui peut entraîner une destruction par percée du fond de la cuve et l'écoulement de la masse du coeur en fusion et des matériaux entourant le coeur, dans le puits en béton contenant la cuve du réacteur. Le contact de la masse en fusion du combustible et des matériaux entourant le combustible, appelée corium, dont la température peut atteindre 2500 à 2800°C, avec le fond du puits de cuve en béton, en l'absence de refroidissement, peut entraîner la destruction complète du fond du puits. Le corium peut alors s'enfoncer dans le radier de l'enceinte de confinement du réacteur, détruire ce radier et contaminer les nappes phréatiques présentes dans le sol du site du réacteur nucléaire. La progression du corium à l'intérieur du sol ne peut s'arrêter que lorsque la puissance résiduelle du corium a décru suffisamment.

On a proposé différents dispositifs pour éviter le contact du corium avec le fond du puits de cuve en béton.

Les dispositifs connus permettent généralement d'étaler la masse du corium sur une certaine surface, pour que la puissance à évacuer par unité de surface soit la plus faible possible et soit compatible avec les possibilités de refroidissement par des fluides. On a par exemple proposé de récupérer et de contenir le corium dans une poche métallique revêtue intérieurement de matériaux réfractaires dont la fusion partielle absorbe de l'énergie, de manière transitoire, et permet de disposer d'un intervalle de temps suffisant pour noyer extérieurement la poche métallique dans une masse d'eau, afin d'évacuer la puissance résiduelle du corium par ébullition de la masse d'eau.

L'inconvénient de ce dispositif provient du fait que les matériaux réfractaires sont le plus souvent de très mauvais conducteurs de la chaleur, ce qui a pour effet d'augmenter la température d'équilibre du corium qui reste à l'état liquide.

On connaît d'autres dispositifs qui utilisent des soles réfractaires refroidies en permanence par un circuit d'eau. Un des inconvénients de ces dispositifs est que le circuit de refroidissement peut présenter des défaillances qui sont susceptibles de le rendre au moins partiellement inefficace. D'autre part, les échanges thermiques ne sont pas suffisamment intenses pour éviter que le corium reste à une température élevée et à l'état liquide après son déversement sur le dispositif de récupération et de refroidissement.

On connaît également un dispositif constitué par un empilement de profilés placés horizontalement dans le fond du puits, en-dessous du fond de la cuve, de manière à constituer des réceptacles pour le corium fondu, afin de réaliser la dispersion de la masse fondue, d'améliorer son refroidissement et de permettre sa solidification. Ce dispositif a cependant l'inconvénient de ne pas assurer une protection efficace du béton du puits de cuve, lorsque l'écoulement du corium se produit de façon localisée. Les profilés qui sont disposés en quinconce sont alors susceptibles de se remplir successivement de corium fondu par débordement local, de telle sorte que la masse fondue peut atteindre rapidement le fond du puits de cuve.

On connaît enfin, par la demande de brevet européen EP-A1-0.514.243, un dispositif de récupération et de refroidissement du coeur d'un réacteur nucléaire en fusion qui permet d'éviter tout contact entre la masse du coeur fondu et le béton du puits de cuve et d'assurer un refroidissement et une solidification rapide de la masse fondue. Ce dispositif est constitué par une structure métallique reposant sur le fond du puits de cuve et immergée dans une masse d'eau remplissant la partie inférieure du puits de cuve. La structure métallique comporte une cheminée centrale, une paroi de récupération et de refroidissement du coeur en fusion et une paroi périphérique.

Ce dispositif qui permet de réaliser rapidement un étalement, un refroidissement et une solidification du corium présente cependant l'inconvénient que la structure métallique peut être détruite, sous l'effet des efforts dynamiques engendrés lors de la chute du corium et du fond de cuve, ceux-ci pouvant atteindre plusieurs milliers de tonnes.

En outre, le refroidissement du corium entraîne la formation d'un débit de vapeur extrêmement important, à l'intérieur du puits de cuve, ce débit étant de l'ordre de 10.000 m³/heure. L'évacuation d'un tel débit de vapeur dans l'atmosphère de l'enceinte de confinement entraîne une dispersion de produits de fission dans l'ensemble du volume du bâtiment du réacteur, ce qui est incompatible avec les principes de sécurité qui doivent être respectés.

Par les WO-A-88/09998, FR-A-2.383.505 et le GB-A-2.236.210, on connaît des dispositifs de recueil et de refroidissement du coeur d'un réacteur nucléaire entré en fusion.

Le WO-A-88/09998 décrit une structure de récupération et de refroidissement insérée dans le radier en béton du réacteur qui comporte un élément conducteur en graphite et un dispositif de refroidissement en contact avec l'élément conducteur.

Le FR-A-2.383.505 concerne un bac de récupération du coeur fondu, rempli de particules de graphite dans lesquelles sont plongés des serpentins de refroidissement.

Le GB-A-2.236.210 concerne une cuve de récupération comportant une structure sandwich constituée par des blocs de matériau réfractaire intercalés entre deux couches métalliques.

Ces dispositifs connus sont constitués au moins partiellement par des éléments non-métalliques et ne peuvent être réalisés par des procédés de construction mécanique classiques.

Le but de l'invention est donc de proposer un dispositif de protection et de refroidissement de la structure en béton d'un réacteur nucléaire dont le coeur est entré en fusion à la suite d'un accident, le réacteur comportant une cuve de forme globalement cylindrique renfermant le coeur du réacteur disposée avec son axe vertical dans un puits de cuve ayant un fond inférieur sur lequel repose le dispositif de refroidissement et de protection constitué par une partie de la structure du réacteur comportant une partie d'un radier situé à l'aplomb de la cuve, ce dispositif qui peut être réalisé de manière simple par des procédés de constructions classiques présentant une très grande résistance et une très grande rigidité, de manière à supporter la chute du corium et du fond de cuve et pouvant assurer le refroidissement du corium sans rejet de vapeur dans le bâtiment du réacteur.

Dans ce but, le dispositif suivant l'invention est constitué par une sole métallique constituée par des blocs rapportés et soudés les uns aux autres recouvrant le fond du puits de cuve dans laquelle sont ménagés des canaux de refroidissement par circulation d'un fluide constitués par des parties usinées de faces rapportées les unes contre les autres des blocs et reliés à des moyens d'alimentation et d'évacuation du fluide de refroidissement.

Afin de bien faire comprendre l'invention, on va maintenant décrire, à titre d'exemple non limitatif, en se référant aux figures jointes en annexe, un mode de réalisation d'un dispositif de refroidissement et de protection suivant l'invention utilisé dans le cas d'un réacteur nucléaire refroidi par de l'eau sous pression.

La figure 1 est une vue en coupe par un plan vertical de l'enceinte de sécurité d'un réacteur nucléaire à eau sous pression comportant un dispositif de refroidissement et de protection suivant l'invention.

La figure 2 est une vue schématique de la partie inférieure du puits de cuve du réacteur nucléaire représenté sur la figure 1.

La figure 3 est une vue de dessus d'une sole métallique constituant un dispositif de refroidissement et de protection suivant l'invention.

La figure 4 est une vue de côté suivant 4 de la figure 3.

La figure 5 est une vue en coupe suivant 5-5 de la figure 3.

La figure 6 est une vue en coupe suivant 6-6 de la figure 5.

La figure 7 est une vue en coupe de la sole métallique réalisée suivant une variante montrant un canal de refroidissement et ses moyens d'alimentation et d'évacuation d'eau de refroidissement.

La figure 8 est une vue en coupe agrandie montrant un clapet de retenue du canal de refroidissement représenté sur la figure 7.

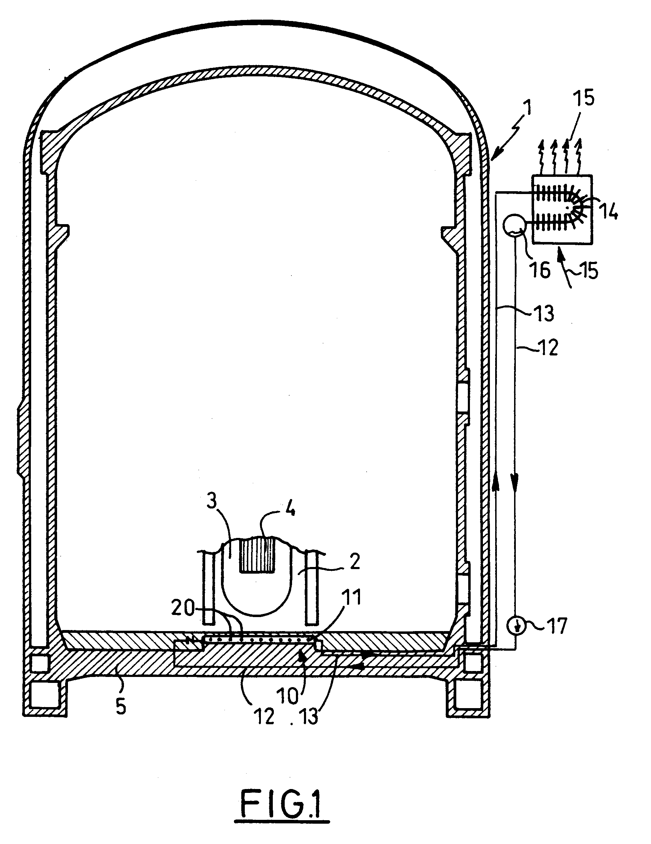

Sur la figure 1, on voit l'enceinte de sécurité 1 à double enveloppe d'un réacteur nucléaire à l'intérieur de laquelle est disposée la cuve 3 renfermant le coeur 4 du réacteur, dans une disposition verticale et suivant l'axe d'un puits de cuve 2.

La partie inférieure de l'enceinte de sécurité 1 en béton à double enveloppe est constituée par un radier 5 reposant sur le sol.

Le dispositif de refroidissement et de protection suivant l'invention, désigné de manière générale par le repère 10, est constitué par une sole métallique 11 reposant sur une partie du radier 5 surélevée et placée à l'aplomb du puits de cuve 2, en-dessous du fond de la cuve 3 renfermant le coeur 4. A l'intérieur de la sole 11 sont ménagés des canaux 20 de refroidissement qui sont alimentés en un fluide de refroidissement tel que de l'eau par un circuit de refroidissement comportant des canalisations 12 et 13 traversant la paroi de l'enceinte de sécurité 1.

Le circuit de refroidissement est constitué de deux demi-circuits comportant chacun des canalisations telles que 12 et 13 reliées à la sole refroidie 11, un échangeur de chaleur 14 refroidi par de l'air (flèche 15), un réservoir 16 d'expansion et de collecte des condensats provenant de l'échangeur 14 et une pompe de circulation 17.

Pour chacun des demi-circuits, l'eau sortant de la sole par la canalisation 13 est refroidie à l'intérieur de l'échangeur de chaleur 14 avant d'être renvoyée dans la sole par la conduite 12, par la hauteur motrice résultant de la différence des volumes spécifiques de l'émulsion eau-vapeur présente dans la canalisation 13 et de l'eau refroidie retournant vers la sole par la canalisation 12.

Le fonctionnement du dispositif de refroidissement et de protection suivant l'invention, dans le cas d'une fusion du coeur 4 et du fond de cuve sera décrit plus en détail dans la suite du texte. De manière schématique, si le coeur 4 du réacteur nucléaire entre en fusion de manière accidentelle et provoque la fusion du fond de cuve, le mélange constitué par le coeur, le matériau de gainage et certains éléments de la cuve du réacteur, appelé corium, se répand sur la sole 11. La sole 11 de forte épaisseur est susceptible de recueillir le corium fondu sans être détruite, d'assurer la protection du radier 5 et d'effectuer le refroidissement du corium.

La sole 11 est refroidie par circulation d'eau parvenant par les conduites d'alimentation telles que 12.

L'eau échauffée ou la vapeur est recueillie par la conduite 13 à la sortie de la sole 11 et refroidie et condensée à l'intérieur de l'échangeur 14. L'eau refroidie est renvoyée dans les canaux de refroidissement de la sole 11 par la canalisation 12.

Le refroidissement du corium est donc effectué sans émission de vapeur dans l'enceinte et en utilisant des moyens de refroidissement disposés à l'extérieur de l'enceinte de sécurité du réacteur.

Les échangeurs de chaleur 14 et les réservoirs 16 du circuit de refroidissement sont installés à une hauteur au-dessus du plan médian horizontal de la sole 11 qui peut être de l'ordre de 25 m et qui permet d'obtenir une pression statique de la colonne d'eau dans les canalisations d'alimentation, du même ordre de grandeur que la perte de charge dans les canaux de refroidissement de la sole 11.

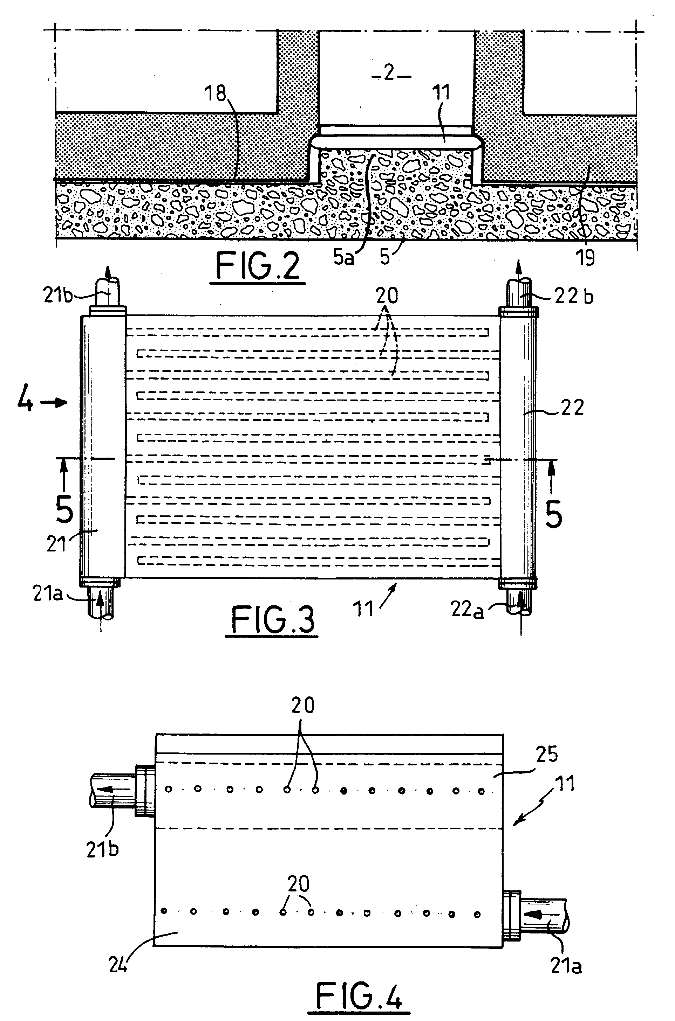

Sur la figure 2, on a représenté la partie 5a du radier 5 disposée en saillie vers le haut à l'aplomb du puits de cuve 2 et la sole refroidie 11 reposant sur la partie 5a du radier.

Une paroi en tôle métallique 18 ou peau qui recouvre la surface supérieure du radier 5 et sur laquelle est coulée une couche de béton de protection est reliée à la partie extérieure de la sole métallique 11.

On va maintenant décrire plus en détail la sole métallique 11 du dispositif de refroidissement et de protection suivant l'invention, en se référant à l'ensemble des figures 3, 4, 5 et 6.

La sole 11 est constituée par une plaque métallique dans laquelle sont ménagés des canaux de refroidissement 20 et qui est reliée à ses extrémités longitudinales à des ensembles collecteurs 21 et 22 permettant d'assurer l'alimentation des canaux 20 en fluide de refroidissement et l'évacuation du fluide de refroidissement échauffé et éventuellement vaporisé.

L'ensemble collecteur 21 est alimenté en eau de refroidissement par une conduite 21a et relié, dans une disposition opposée, à une conduite d'évacuation 21b.

De même, l'ensemble collecteur 22 est relié à l'une de ses extrémités transversales à une conduite d'alimentation 22a et à son autre extrémité à une conduite d'évacuation 22b.

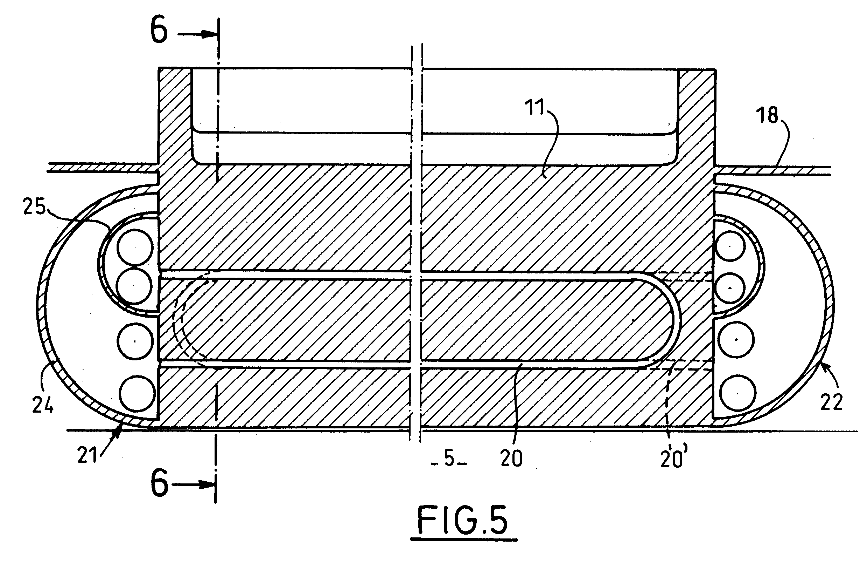

Comme il est visible sur la figure 5, chacun des ensembles collecteurs comporte une enveloppe externe 24 et une enveloppe interne 25 fixées par soudage sur les faces latérales de la sole massive métallique 11.

Chacun des canaux 20 ménagés dans l'épaisseur de la sole présente une forme d'épingle et comporte une branche inférieure débouchant à l'une de ses extrémités à l'intérieur de l'enveloppe externe 24 et à l'extérieur de l'enveloppe interne 25 d'un collecteur 21 (ou 22) et une branche supérieure débouchant à l'une de ses extrémités à l'intérieur de l'enveloppe interne 25 de l'un des collecteurs 21 (ou 22).

Les canaux de refroidissement successifs tels que 20, 20′ disposés suivant la longueur de la sole refroidie 11 débouchent alternativement dans le collecteur 21 ou dans le collecteur 22.

L'eau de refroidissement circule, pendant le fonctionnement du dispositif, à l'intérieur de chacun des canaux 20, entre le collecteur externe d'alimentation 24 et le collecteur interne d'évacuation 25.

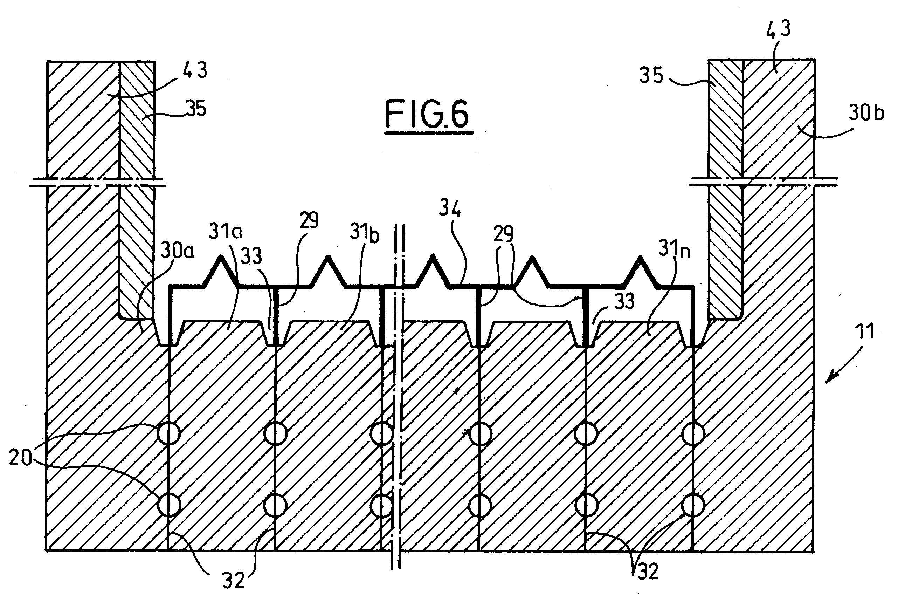

Comme il est visible sur la figure 6, la sole métallique 11 est constituée de blocs successifs 30a, 31a, 31b, ..., 31n et 30b soudés entre eux suivant leurs faces latérales pour constituer des plans de joints successifs et parallèles 32.

Les blocs d'extrémité 30a et 30b présentent une hauteur supérieure à la hauteur des blocs intermédiaires 31a, 31b, ..., 31n et comportent une partie supérieure 43 en saillie vers le haut par rapport à la partie supérieure des blocs 31, constituant un muret destiné à retenir la masse du corium en fusion sur la sole 11.

Les blocs d'extrémité 30a et 30b comportent une face destinée à être rapportée et soudée contre une face correspondante d'un bloc intermédiaire qui est usinée de manière à constituer par juxtaposition avec des usinages correspondants des blocs intermédiaires, la branche inférieure et la branche supérieure d'un canal de refroidissement 20.

Les blocs intermédiaires 31a, 31b, ..., 31n sont usinés sur leurs deux faces latérales qui sont rapportées et soudées contre une face correspondante d'un autre bloc intermédiaire ou d'un bloc d'extrémité, pour constituer des parties des branches inférieures et supérieures de deux canaux de refroidissement successifs.

Les faces surélevées 43 des blocs d'extrémité 30a et 30b sont revêtues d'une couche de matière réfractaire 35 destinée à protéger le muret contre le corium chaud susceptible de se déverser sur la sole 11.

Les blocs d'extrémité 30a et 30b ainsi que les blocs intermédiaires 31a à 31n sont usinés à leur partie supérieure, de manière à ménager, lorsqu'ils ont été juxtaposés, des rainures parallèles 33, dans la direction longitudinale de la sole 11. Ces rainures 33 permettent de favoriser le transfert de la chaleur provenant du corium vers les canaux de refroidissement 20 et de constituer des pièges maintenant le corium en cours de refroidissement. Ces rainures permettent également de faciliter les opérations de soudure des blocs d'acier juxtaposés deux à deux.

Une structure en tôle mécano-soudée 34 est disposée au-dessus de la surface supérieure des blocs intermédiaires 31 de la sole 11, de manière à protéger la sole et à absorber l'énergie cinétique mise en jeu lors de la chute du corium et du fond de cuve sur la sole 11, dans le cas d'un accident se traduisant par une fusion du coeur du réacteur.

La structure 34 comporte une partie supérieure constituée par une tôle pliée et un ensemble de plaques de renfort 29 perpendiculaires à la partie supérieure de la structure venant s'engager chacune dans une rainure 33 afin d'assurer le maintien de la structure 34 sur la sole 11.

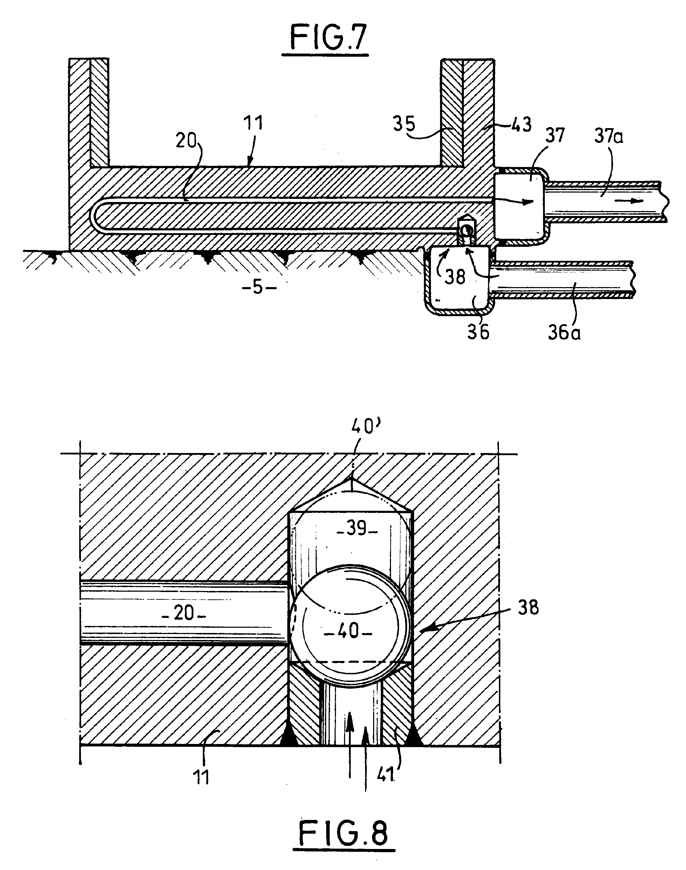

Comme il est visible sur la figure 7 qui est relative à une variante de réalisation du dispositif, en ce qui concerne la position des collecteurs, chacun des canaux de refroidissement 20 en épingle disposés à l'intérieur de la sole métallique 11 est relié par l'une de ses extrémités à un collecteur d'alimentation 36, lui-même relié à une conduite d'alimentation 36a, par l'intermédiaire d'un clapet anti-retour 38. L'autre extrémité du canal de refroidissement 20 est reliée à un collecteur d'évacuation 37 lui-même relié à une conduite d'évacuation 37a.

Les conduites d'alimentation 36a et 37a sont elles-mêmes reliées à des conduites d'un circuit de refroidissement telles que les conduites 12 et 13 représentées sur la figure 1.

Sur la figure 8, on a représenté un clapet anti-retour 38 disposé à l'entrée d'un canal de refroidissement 20 ménagé à l'intérieur de la sole 11.

Le clapet 38 comporte une chambre 39 à l'intérieur de laquelle est soudé un siège 41. Une bille d'alumine 40 vient reposer sous l'effet de son poids sur le siège 41, de manière à fermer le passage mettant en communication la chambre d'alimentation 36 avec le canal 20, lorsque le collecteur 36 n'est pas alimenté.

Lorsque le collecteur est alimenté, la bille 40 est soulevée par le courant d'eau de refroidissement dans sa position 40′, de sorte que l'eau peut pénétrer dans le canal de refroidissement 20.

L'eau de refroidissement circulant à l'intérieur du canal de refroidissement 20 est susceptible de se vaporiser au moins partiellement au début du refroidissement lorsque la circulation naturelle n'est pas encore établie, si bien que le canal 20 est parcouru par une émulsion eau-vapeur.

Le clapet 38 permet d'éviter que l'émulsion eau-vapeur formée ne puisse s'échapper par le collecteur d'alimentation 36. Cette émulsion eau-vapeur ne peut s'échapper que par le collecteur d'évacuation 37 ou collecteur chaud. Il s'établit donc progressivement une circulation naturelle par différence de densité des deux colonnes fluides qui maintient ensuite le clapet soulevé.

Dans le cas d'un dispositif de refroidissement et de protection selon l'invention utilisé dans un réacteur nucléaire à eau sous pression tel que construit et exploité actuellement, on utilise une sole dont la surface correspondant sensiblement à la surface du fond de puits de cuve est de 66 m².

La sole métallique réalisée en acier de construction A 42 présente une épaisseur supérieure à 300 mm dans sa partie centrale et comporte des murets latéraux destinés à retenir le corium d'une hauteur voisine de 800 mm.

La sole 11 est constituée par des blocs juxtaposés 30a, 30b, 31a à 31n dont la longueur est voisine de 8 m.

Ces blocs sont usinés de manière à ménager des canaux de refroidissement dont le diamètre est voisin de 30 mm.

La sole repose sur le radier 5 en béton dont elle assure la protection au niveau du fond de cuve.

La sole permet de recueillir le corium en fusion, dans le cas d'un incident se traduisant par un défaut de refroidissement total dans le réacteur, ce corium ayant un volume supérieur à 40 m³.

Le corium déversé sur la sole métallique 11 occupe une hauteur supérieure à 600 mm dans la partie centrale de la sole 11, entre les murets 43.

Le corium formé dans le cas d'une fusion du coeur peut se présenter sous la forme d'un milieu liquide continu ou sous la forme de débris partiellement fondus qui se déversent sur la sole 11 du dispositif de refroidissement, en cas d'accident. Dans tous les cas, le corium s'étale de façon à peu près uniforme sur la surface de la sole.

Dans le cas où le corium est un milieu continu en fusion, il est très fluide et il ne peut se former à sa surface une croûte solidifiée stable, dans la mesure où il se produit un dégagement de chaleur intense sous la surface du corium. L'ensemble du corium à grande fluidité s'étale donc sans difficulté sur la sole. Si le corium est constitué par des débris fragmentés, il peut se former des amas de matière localisés sur la sole mais ces amas ne peuvent atteindre une taille conduisant à un flux de chaleur supérieur à celui apparaissant dans le cas d'une répartition uniforme du corium liquide en fusion.

Lorsque le corium se répand sur la sole métallique 11, il vient en contact avec la structure 34 qui absorbe une partie de l'énergie cinétique accompagnant la chute du corium. La sole métallique 11 est dimensionnée pour supporter la chute du corium et en particulier, les canaux de refroidissement 20 sont espacés d'une distance P constituant le pas du réseau de refroidissement dont la valeur est telle que la structure de la sole refroidie soit équivalente à une structure massive susceptible de transmettre au radier 5 les charges importantes accompagnant la chute du corium, sans déformation notable des canaux de refroidissement.

Lorsque le corium dont la température est voisine de 2400°C entre en contact avec la surface supérieure de la sole 11, l'acier de la sole fond sur une faible épaisseur et se mélange au corium. Une croûte de faible épaisseur (d'une épaisseur de quelques centimètres) se forme entre le corium et l'acier et un équilibre thermique s'établit dès que l'énergie absorbée par les canaux de refroidissement 20 devient égale à la chaleur dégagée par le corium.

Dans le calcul des dimensions de la sole et des caractéristiques du système de refroidissement, on suppose que le corium est entièrement sec et qu'il n'est donc pas refroidi par le haut par l'évaporation d'eau. De plus, on néglige le flux de chaleur rayonné par le corium en direction du puits de cuve. Le circuit est conçu pour refroidir le corium, soit en circulation naturelle, soit en circulation forcée.

En régime permanent, lorsqu'une croûte solidifiée s'est formée au contact de la sole, la température à l'interface de la croûte solidifiée et de la surface supérieure de la sole est inférieure à la température de fusion de l'acier, soit 1450°C. La totalité de la chaleur dégagée par le corium est évacuée par conduction dans la croûte solidifiée et dans la sole métallique.

La puissance dégagée par le corium recueilli par la sole est de l'ordre de 32 MW, cette puissance étant évacuée par le circuit de refroidissement.

Dès que le corium entre en contact avec la sole, l'échauffement de cette sole produit une ébullition partielle de l'eau, ce qui entraîne une circulation naturelle si les pompes 17 sont hors service.

Il se produit une circulation naturelle de l'eau de refroidissement dans les canaux avec ébullition partielle ; cependant, les canaux sont conçus de manière qu'il ne puisse y avoir d'obstruction par la vapeur. La circulation naturelle de l'eau de refroidissement s'amorce sans aucune intervention extérieure et l'eau traverse les pompes 17 du circuit de refroidissement.

A plus long terme, par exemple au bout de trois jours après l'accident ayant entraîné la fusion du coeur, les deux pompes 17 du circuit de refroidissement pourront être remises en marche pour établir une circulation forcée.

On obtient alors une circulation continue conduisant à un refroidissement accéléré et à une solidification du corium répandu sur la sole.

Les pompes 17 peuvent être entraînées par des moteurs thermiques ou électriques.

L'eau en circulation s'échauffe dans la branche inférieure de chacun des canaux de refroidissement avant de passer dans la branche supérieure où elle s'échauffe tout en restant liquide, dans le cas d'une circulation forcée ou en se vaporisant partiellement, dans le cas d'une circulation naturelle d'un mélange à deux phases.

Le dispositif suivant l'invention est donc extrêmement sûr et permet une protection efficace du radier du réacteur, dans la mesure où la sole métallique peut supporter la chute du corium sans se déformer, la circulation du fluide de refroidissement dans les canaux de la sole commençant immédiatement après la chute du corium, de manière passive.

En outre, le refroidissement à long terme du corium jusqu'à sa solidification complète peut être assuré facilement par circulation forcée d'eau de refroidissement.

Le refroidissement du corium est effectué sans qu'il se produise de vapeur à l'intérieur du bâtiment du réacteur.

L'invention ne se limite pas au mode de réalisation qui a été décrit.

C'est ainsi qu'on peut imaginer d'utiliser des soles métalliques réalisées d'une manière différente de celle qui a été décrite. Au lieu de blocs soudés les uns aux autres, on peut utiliser des éléments constitutifs de la sole qui sont assemblés par emboîtement et fixés sur le radier par des plots encastrés et scellés dans le radier et engagés dans des ouvertures prévues dans chacun des éléments de la sole.

La sole peut avoir des formes et dimensions variables, suivant les caractéristiques de la cuve et du puits de cuve du réacteur.

Le circuit de refroidissement de la sole peut être réalisé d'une manière différente de celle qui a été décrite.

Il est cependant préférable de disposer les éléments actifs du circuit de refroidissement tels que les échangeurs de chaleur à l'extérieur de l'enceinte de sécurité du réacteur.

La circulation forcée du fluide de refroidissement peut être assurée par tout type de pompes de circulation généralement utilisées dans les circuits de refroidissement d'un réacteur nucléaire.

Enfin, le dispositif de refroidissement et de protection suivant l'invention peut être utilisé dans le cas de tout réacteur nucléaire comportant une cuve renfermant le coeur du réacteur disposée dans un puits de cuve dont le fond est constitué par une partie de la structure du réacteur nucléaire tel qu'un radier.

## Revendications

1. Dispositif de protection et de refroidissement de la structure en béton (5) d'un réacteur nucléaire dont le coeur (4) est entré en fusion à la suite d'un accident, le réacteur comportant une cuve (3) de forme globalement cylindrique renfermant le coeur (4) du réacteur disposée avec son axe vertical dans un puits de cuve (2) ayant un fond inférieur sur lequel repose le dispositif de refroidissement et de protection (11), constitué par une partie (5) de la structure du réacteur comportant une partie du radier située à l'aplomb de la cuve (3), caractérisé par le fait qu'il est constitué par une sole métallique (11) constituée par des blocs (30a, 30b, 31a, 31b, ..., 31n) rapportés et soudés les uns aux autres recouvrant le fond du puits de cuve dans laquelle sont ménagés des canaux de refroidissement (20) par circulation d'un fluide constitués par des parties usinées de faces rapportées les unes contre les autres des blocs (30a, 30b, 31a, ..., 31n) et reliés à des moyens d'alimentation et d'évacuation (12, 13, 14, 15) du fluide de refroidissement.

2. Dispositif suivant la revendication 1, caractérisé par le fait que les faces rapportées les unes contre les autres des blocs (30a, 30b, 31a, ..., 31n) sont des faces latérales verticales.

3. Dispositif suivant l'une quelconque des revendications 1 et 2, caractérisé par le fait que la sole métallique (11) comporte deux blocs d'extrémité (30a, 30b) à ses extrémités longitudinales et des blocs intermédiaires (31a, 31n) entre les blocs d'extrémité (30a, 30b), les blocs d'extrémité (30a, 30b) comportant des parties supérieures (43) en saillie par rapport à la surface supérieure des blocs intermédiaires (31a, 31n) constituant un muret destiné à contenir le coeur en fusion du réacteur, lors d'un déversement de ce coeur sur la sole (11).

4. Dispositif suivant l'une quelconque des revendications 1 à 3, caractérisé par le fait que la sole (11) comporte une structure en tôle métallique reposant sur sa surface supérieure horizontale avec un certain écartement et destinée à absorber l'énergie cinétique du coeur en fusion du réacteur, lors d'un déversement sur la sole (11).

5. Dispositif suivant la revendication 3, caractérisé par le fait que les parties en saillie (43) des blocs d'extrémité (30a, 30b) de la sole (11) comportent des faces internes en regard garnies d'une couche de matière réfractaire (35).

6. Dispositif suivant l'une quelconque des revendications 1 à 5, caractérisé par le fait que les moyens d'alimentation et d'évacuation du fluide de refroidissement de la sole (11) comportent des collecteurs (24, 25, 36, 37) communiquant avec les parties d'extrémité des canaux de refroidissement (20), des conduites d'alimentation et d'évacuation du fluide de refroidissement (21a, 21b, 22a, 22b, 36a, 37a) et un circuit de refroidissement comportant au moins un échangeur de chaleur (14) et des canalisations (12, 13) reliées aux canalisations d'alimentation des collecteurs d'alimentation et d'évacuation du fluide de refroidissement de la sole.

7. Dispositif suivant la revendication 6, caractérisé par le fait que le circuit de refroidissement est disposé au moins partiellement à l'extérieur d'une enceinte de sécurité (1) constituant une partie de la structure du réacteur à l'intérieur de laquelle est disposée la cuve (3) renfermant le coeur (4).

8. Dispositif suivant la revendication 7, caractérisé par le fait que le circuit de refroidissement comporte au moins un échangeur de chaleur (14), au moins un réservoir d'expansion et de condensation (16) et une pompe de circulation (17) disposés en série, à l'extérieur de l'enceinte de sécurité (1), sur des canalisations (12, 13) du circuit de refroidissement.

9. Dispositif suivant l'une quelconque des revendications 1 à 8, caractérisé par le fait qu'un clapet anti-retour (38) est disposé sur la partie d'extrémité de chacun des canaux de refroidissement reliées à un moyen d'alimentation (36) en fluide de refroidissement.

## Patentansprüche

1. Schutz- und Kühlvorrichtung für die Betonstruktur (5) eines Kernreaktors, dessen Kern (4) infolge eines Unfalls in eine Kernschmelze eingetreten ist, wobei der Reaktor einen allgemein zylinderförmigen Behälter (3) aufweist, der den Reaktorkern (4) einschließt und mit seiner senkrechten Achse in einer Behälterwanne (2) angeordnet ist, mit einem unteren Boden, auf dem die Kühl- und Schutzvorrichtung (11) ruht, die aus einem Teil (5) der Reaktorstruktur besteht, die einen Teil der Sohle aufweist, die senkrecht unterhalb des Behälters (3) liegt,
dadurch gekennzeichnet, daß
die Vorrichtung aus einer Metallplatte (11) besteht, die aus Blöcken (30a, 30b, 31a, 31b, ..., 31n), die aneinander angrenzend und miteinander verschweißt sind und den Boden der Behälterwanne abdecken besteht, in dem die Kanäle angeordnet sind, zur Kühlung (20) durch Zirkulation eines Fluids, wobei die Blöcke aus bearbeiteten Teilen bestehen, mit aneinanderstoßenden Seiten der Blöcke (30a, 30b, 31a, ..., 31n), und die mit Mitteln zum Speisen und Abführen des Kühlfluids (12, 13, 14, 15) versehen sind.

2. Vorrichtung nach Anspruch 1, dadurch gekennzeichnet, daß die aneinanderstoßenden Seiten der Blöcke (30a, 30b, 31a, ... 31n) die senkrechten Seitenwände sind.

3. Vorrichtung nach einem der Ansprüche 1 und 2, dadurch gekennzeichnet, daß die Metallplatte (11) zwei Endblöcke (30a, 30b) an ihren Längsenden aufweist und Zwischenblöcke (31a, 31n) zwischen den Endblöcken (30a, 30b), wobei die Endblöcke (30a, 30b) obere Bereiche (43) aufweisen, die bezüglich der oberen Oberfläche der Zwischenblöcke (31a, 31n) vorstehen und einen Behälter bilden, der dazu bestimmt ist, den schmelzenden Kern des Reaktors aufzunehmen, während sich der Kern auf die Platte (11) ergießt.

4. Vorrichtung nach einem der Ansprüche 1 bis 3, dadurch gekennzeichnet, daß die Platte (11) eine Metallblechstruktur aufweist, die mit ihrer oberen horizontalen Oberfläche mit einem bestimmten Abstand auf der Platte ruht und dazu bestimmt ist die kinetische Energie des schmelzenden Reaktorkerns zu absorbieren, während dieser sich auf die Platte (11) ergießt.

5. Vorrichtung nach Anspruch 3, dadurch gekennzeichnet, daß die vorstehenden Teile (43) der Endblöcke (30a, 30b) der Platte (11) Innenseiten aufweisen, die mit einer Schicht aus feuerfestem Material (35) besteht.

6. Vorrichtung nach einem der Ansprüche 1 bis 5, dadurch gekennzeichnet, daß die Mittel zur Speisung und Abführung des Kühlfluids der Platte (11) Sammler (24, 25, 36, 37) aufweisen, die mit den Endbereichen der Kühlkanäle (20) verbunden sind, wobei die Speise- und Abführkanäle des Kühlfluids (21a, 21b, 22a, 22b, 36a, 37a) und ein Kühlmittelkreis mindestens einen Wärmetauscher (14) aufweisen und Leitungen (12, 13) die an den Speisekanälen der Sammler zur Speisung und Abführung des Kühlfluids der Platte angeschlossen sind.

7. Vorrichtung nach Anspruch 6, dadurch gekennzeichnet, daß der Kühlkreislauf mindestens teilweise außerhalb eines Sicherheitsbehälters (1) angeordnet ist, der einen Teil des Reaktoraufbaus darstellt, in dem der den Kern (4) einschließende Behälter (3) angeordnet ist.

8. Vorrichtung nach Anspruch 7, dadurch gekennzeichnet, daß der Kühlkreislauf mindestens einen Wärmetauscher (14), sowie mindestens ein Druckausgleich- und Kondensationsreservoir (16) und eine Zirkulationspumpe (17) außerhalb des Sicherheitsbehälters (1) an der Kanalisation (12, 13) des Kühlkreislaufes aufweist.

9. Vorrichtung nach einem der Ansprüche 1 bis 8, dadurch gekennzeichnet, daß ein Rückschlagventil (38) im Endbereich eines jeden Kühlkanals angeordnet ist, der an eine Kühlfluidspeisung (36) angeschlossen ist.

## Claims

1. Device for shielding and cooling the concrete structure (5) of a nuclear reactor, the core (4) of which is undergoing melt-down following an accident, said reactor comprising a tank (3) of an overall cylindrical shape enclosing the core (4) of the reactor disposed with its vertical axis in a tank shaft (2) having a lower base portion, on which the shielding and cooling device (11) rests, formed by a section (5) of the structure of the reactor comprising a section of the floor located perpendicular to the tank (3), characterised in that it is formed by a metal beam (11) comprising blocks (30a, 30b, 31a, 31b, ..., 31n) attached and welded to one another covering the base of the tank shaft, and in said beam ducts (20) are housed for cooling by fluid circulation, said ducts being formed by machined sections of blocks (30a, 30b, 31a, ... 31n) with faces abutting one another and being connected to means (12, 13, 14, 15) for supplying and discharging the cooling fluid.

2. Device according to Claim 1, characterised in that the faces of the blocks (30a, 30b, 31a, ..., 31n) abutting one another are vertical side faces.

3. Device according to any one of Claims 1 and 2, characterised in that metal beam (11) comprises two end blocks (30a, 30b) at its longitudinal ends and intermediate blocks (31a, 31n) between the end blocks (30a, 30b), said end blocks (30a, 30b) having upper sections (43) projecting in relation to the upper surface of the intermediate blocks (31a, 31n) forming a low wall intended to contain the core of the reactor undergoing melt-down when this core is tipped onto the beam (11).

4. Device according to any one of Claims 1 to 3, characterised in that the beam (11) comprises a sheet metal structure resting on its upper horizontal surface with some spacing and intended to absorb the kinetic energy from the core of the reactor undergoing melt-down when being tipped onto the beam (11).

5. Device according to Claim 3, characterised in that the projecting sections (43) of the end blocks (30a, 30b) of the beam (11) comprise internal opposing faces covered with a layer of refractory material (35).

6. Device according to any one of Claims 1 to 5, characterised in that the means for supplying and discharging the cooling fluid of the beam (11) comprise collectors (24, 25, 36, 37) connecting with the end sections of the cooling ducts (20) and of the supply and discharge ducts for the cooling fluid (21a, 21b, 22a, 22b, 36a, 37a) and a cooling circuit comprising at least one heat exchanger (14) and pipes (12, 13) connected to supply pipes of the collectors for supplying and discharging the cooling fluid of the beam.

7. Device according to Claim 6, characterised in that the cooling circuit is disposed at least partially on the outside of a protective enclosure (1) forming a part of the structure of the reactor, the tank (3) enclosing the core (4) being disposed inside said enclosure.

8. Device according to Claim 7, characterised in that the cooling circuit comprises at least one heat exchanger (14), at least one expansion and condensation bath (16) and a circulation pump (17) connected in series on the outside of the protective enclosure (1) and disposed on the pipes (12, 13) of the cooling circuit.

9. Device according to any one of Claims 1 to 8, characterised in that a non-return valve (38) is disposed on the end section of each of the cooling ducts connected to a supply means (36) for cooling fluid.
